Europäisches Patentamt

European Patent Office

Office européen des brevets

(19)

(11) **EP 1 259 938 B1**

(12) **EUROPÄISCHE PATENTSCHRIFT**

(45) Veröffentlichungstag und Bekanntmachung des Hinweises auf die Patenterteilung:
**18.08.2004 Patentblatt 2004/34**

(51) Int Cl.$^7$: **G06T 3/60**

(21) Anmeldenummer: **01907551.4**

(22) Anmeldetag: **22.02.2001**

(86) Internationale Anmeldenummer:
**PCT/EP2001/002027**

(87) Internationale Veröffentlichungsnummer:
**WO 2001/065484 (07.09.2001 Gazette 2001/36)**

(54) **VERFAHREN UND VORRICHTUNG ZUR TRANSFORMATION VON BILDERN IN ZWEI KOORDINATENSYSTEMEN**

METHOD AND DEVICE FOR THE TRANSFORMATION OF IMAGES IN TWO CO-ORDINATE SYSTEMS

PROCEDE ET DISPOSITIF POUR TRANSFORMER DES IMAGES DANS DEUX SYSTEMES DE COORDONNEES

(84) Benannte Vertragsstaaten:
**DE FR GB IT**

(30) Priorität: **29.02.2000 DE 10009536**

(43) Veröffentlichungstag der Anmeldung:
**27.11.2002 Patentblatt 2002/48**

(73) Patentinhaber: **CGK Computergesellschaft Konstanz MBH**
**78467 Konstanz (DE)**

(72) Erfinder: **FREI, Bernhard**
**78465 Konstanz (DE)**

(74) Vertreter:
**Schaumburg, Thoenes, Thurn, Landskron Patentanwälte**
**Postfach 86 07 48**
**81634 München (DE)**

(56) Entgegenhaltungen:
**US-A- 4 611 232          US-A- 4 725 887**
**US-A- 4 985 930          US-A- 5 793 378**

• **PATENT ABSTRACTS OF JAPAN vol. 2000, no. 03, 30. März 2000 (2000-03-30) -& JP 11 353464 A (FUJI PHOTO FILM CO LTD), 24. Dezember 1999 (1999-12-24)**

**Beschreibung**

Die Erfindung betrifft ein Verfahren und eine Vorrichtung zur Transformation eines durch Grauwert- und/oder Farbvalenzwerte in einem ersten Koordinatensystem beschriebenen Bildes in ein zweites Koordinatensystem, mit den folgenden Schritten: a) Herstellen einer Beziehung zwischen den Koordinaten von Quellbildpixeln in einem Ausgangsbild und den Koordinaten von Zielbildpixeln in einem Zielbild über eine Transformationsmatrix, wobei zum natürlichen Wertebereich gehörende Koordinaten der Zielbildpixel mit in den reellen Wertebereich fallenden Koordinaten der Quellbildpixel korrespondieren können und umgekehrt; und b) Berücksichtigung der Nachbarpixel bei der Bestimmung des Valenzwertes eines Zielbildpixels.

Die Anwendung derartiger Verfahren ist beispielsweise nach dem Scannen von Belegen erforderlich. Beim Scannen von Belegen werden diese Belege durch mechanische Toleranzen des Beleglaufes oder durch nicht genügend ausgerichtetes Beleggut mehr oder weniger schräg über die Abtaststelle gezogen, wodurch die Belege auch schräg abgebildet werden.

Diese Schräglage wird im allgemeinen als störend empfunden. Die Nachbearbeitung nicht ausgerichteter Bilder ist besonders ermüdend und aufwendig, weil immer ein Bild mit der Fläche des das schräge Bild umschreibenden Rechtecks gespeichert werden muß. Dadurch wird der Speicherbedarf erhöht. Sofern eine automatische Zeichenerkennung durchgeführt wird, erhöht die Schräglage den Rechenaufwand für die Zeichenerkennung.

Eine elektronische Korrektur derartiger Schräglagen ist insbesondere bei reinen Binärscannern zur automatischen Belegverarbeitung Stand der Technik. Bei Grau- und Farb-Scannern ist diese Schräglagenkorrektur jedoch nicht selbstverständlich.

Dies liegt unter anderem daran, daß die Binärdaten eines Bildes ohne weiteres in einem SRAM-Speicher aufgenommen werden können, der hinsichtlich seiner Zugriffsgeschwindigkeit mit der Verarbeitungsleistung eines Rechenwerkes Schritt halten kann.

Der Speicherbedarf eines Farbbildes ist jedoch um Faktoren von 16 bis 32 höher als bei Schwarz/Weiß- bzw. Binärbildern. Dies macht aus Kosten- und Platzgründen bei Scannern für Beleggrößen ab DIN-A4 eine Zwischenspeicherung in DRAMs erforderlich. Die DRAMs erlauben aber nur eine Zugriffsgeschwindigkeit, die bei direkter Adressierung ungefähr bei einem Fünftel der SRAMs liegt.

Die Grundlage des im Oberbegriff des Anspruchs 1 genannten Verfahrens ist die aus der Literatur allgemein bekannte Bestimmung der Koordinaten eines Punktes $X_{Quell}$ im Ausgangsbild, korrespondierend mit den Koordinaten eines Punktes $X_{Ziel}$ im Zielbild, über eine Transformationsmatrix T. Die Matrix T kann dabei, in Abhängigkeit von der durchzuführenden Transformation, unterschiedlich definiert sein, in an sich bekannter Weise.

Bei der Verwendung eines homogenen Koordinatensystems kann die Matrix T beispielsweise die folgenden Definition haben:

$$T = \begin{matrix} \cos(\o)/S_y & \sin(\o)/S_y & 0 \\ -\sin(\o)/S_x & \cos(\o)/S_x & 0 \\ 0 & 0 & 1 \end{matrix}$$

Mit dieser Matrix kann eine beispielsweise zur Schräglagenkorrektur erforderliche Bildrotation durchgeführt werden, wobei ø der Rotationswinkel ist.

Die Schräglagenkorrektur ist lediglich ein Spezialfall der Rotation um beliebige Winkel. Ein Spezialfall deswegen, weil aus mechanischen Gründen in der Regel nur Rotationswinkel ø auftreten, die im Bereich von ca. +/- 10 Grad liegen.

Die Erfindung ist jedoch nicht auf diesen Winkelbereich beschränkt, sondern kann bei beliebigen Winkelbereichen angewendet werden.

Dabei sind $S_y$ und $S_x$ Skalierungsfaktoren, durch die die Rotation mit einer Skalierung verknüpft werden kann.

Zu einem Zielbildvektor z=[$y_z$, $x_z$] gehört dann der Quellbildvektor q=[$y_q$, $x_q$], dessen Elemente aus T gemäß

$$q = Tz$$

bestimmt werden.

Dadurch erhält man die folgenden Bestimmungsgleichungen:

$$y_q = +\cos(\emptyset)*y_z/S_y + \sin(\emptyset)*x_z/S_y$$

$$x_q = -\sin(\emptyset)*y_z/S_x + \cos(\emptyset)*x_z/S_x$$

Bei der Bestimmung der Quellbildkoordinaten für Winkel

$$\emptyset \neq n * \pi / 4$$

ergeben sich für die Koordinatenwerte der Zielbildkoordinaten mit dem Wertebereich N Koordinatenwerte im Wertebereich R.

Da die Pixel des Quellbildes aber nur mit diskreten Stützstellen repräsentiert sind, kann ein Zuordnungsproblem entstehen.

Während man sich bei Binärbildern gut damit helfen kann, daß man das Quellbildpixel mit dem geringsten Abstand zum exakten Quellbildort wählt, führt dieses Verfahren bei Grau- und Farbbildern zu störenden Treppenverläufen an Kanten.

Ein übliches Verfahren zur Behebung dieses Problems ist die bilineare Interpolation.

Für die Bestimmung der Grauwert- und/oder Farbvalenzwerte des Zielbildes werden die vier Nachbarpixel herangezogen, und mit dem Anteil der Nachkommastelle gewichtet:

$$d_x = x_q - \text{frac}(x_q)$$

$$d_y = y_q - \text{frac}(y_q)$$

wobei gilt:

$$pix00 = qpix00*(1,0-d_x)$$

$$pix01 = qpix01*dx$$

$$pix10 = qpix10*(1,0-d_x)$$

$$pix11 = qpix11*d_x$$

und:

$$s_{y,x} = (pix00-pix01)*(1,0-dy)-(pix10-pix11)*d_y.$$

Für jedes Zielbildpixel werden also die Werte der vier benachbarten Pixel benötigt.

Dies führt gegenüber der für den Transport des Bildes erforderlichen Kapazität beim Speicherzugriff zu einer Erhöhung der erforderlichen Kanalkapazität um das Vierfache.

Aus der EP-A-0 280 316 ist ein Verfahren zur Transformation eines Bildes von einem ersten Koordinatensystem in ein zweites Koordinatensystem bekannt. Mithilfe von Filterkoeffizienten eines Filtersystems und einer bestimmten Gewichtung kann einer Bildverzerrung entgegengewirkt werden.

Aus der DE-A-19715491 ist ein Interpolationsverfahren ist ein Interpolationsverfahren zur schnellen Bildvergrößerung beschrieben. Aus den Bildpixeln eines Quellenbildes werden Bildpixel eines Zielbildes ermittelt, wobei ein mehrmaliges Lesen der gleichen Bildpixel des Quellbildes nicht erforderlich ist. Zur Transformation werden gewichtete Funktionen verwendet.

In der DE-A-19601564 ist eine digitale Interpolationsvorrichtung für Bilder beschrieben, bei der eine Bildtransformation stattfindet. Die Transformation wird mithilfe von Interpolationskoeffizienten durchgeführt.

In dem Dokument US-A-4611232 ist eine Vorrichtung zum Durchführen einer an sich bekannten bilinearen Interpolation offenbart. Die Vorrichtung enthält Taktumschalter, durch die unterschiedliche Pixeldaten miteinander verknüpft werden können.

Der vorliegenden Erfindung liegt die Aufgabe zugrunde, ein Verfahren anzugeben, bei dem die erforderliche Kanalkapazität beim Speicherzugriff geringer ist.

Diese Aufgabe wird durch die im Anspruch 1 angegebenen Merkmale gelöst.

Vorteilhafte Ausgestaltungen und Weiterbildungen der Erfindung ergeben sich aus den Unteransprüchen.

Erfindungsgemäß erfolgt die Berücksichtigung der Nachbarpixel bei der Bestimmung des Valenzwertes eines Zielbildpixels derart, daß aus den Koordinaten von jeweils zwei aufeinanderfolgenden Quellbildpixeln Hilfskoordinaten bestimmt werden, aus denen zwei Zielbildpixel berechnet werden können, so dass die erforderliche Kanalkapazität zum Speicher hin halbiert wird.

Die Rechenvorschrift für die Bestimmung der Hilfskoordinaten wird dabei vorzugsweise so gewählt, daß sie zu einem möglichst geringen Fehler bei einer einfachen hardwaremäßigen Realisierbarkeit führt.

Die Vorschrift zur Bestimmung der Hilfskoordinaten ist dabei wie folgt:

$$Y_{hquell} = (y_q + y_{q+1}) / 2$$

$$X_{hquell} = (x_q + x_{q+1}) / 2.$$

Aus diesen Hilfskoordinaten $x_{hquell}$, $y_{hquell}$ können dann, über die folgenden Differenzenpaare, Gewichte $d_{xq}$, $d_{yq}$, $d_{xq+1}$, $d_{yq+1}$ bestimmt werden:

$$d_{xq} = x_q - frac(x_{hquell})$$

$$d_{yq} = y_q - frac(y_{hquell})$$

$$d_{xq+1} = x_{q+1} - frac(x_{hquell})$$

$$d_{yq+1} = y_{q+1} - frac(y_{hquell}).$$

Es werden also für jedes Quadrupel der Quellpixel zwei Paare der Differenzen bestimmt. Während aber diese Gewichte bei der Normalform der bilinearen Interpolation im Wertebereich von 0 bis 1 liegen, können die durch die genannte Vorschrift bestimmten Gewichte außerhalb dieser Grenzen liegen. Dies bedeutet aber, daß Anteile von Pixeln außerhalb der momentan zur Verfügung stehenden Pixel mit einbezogen werden müßten.

Um dies zu vermeiden, werden die Gewichte vorzugsweise nach folgender Vorschrift beschnitten:

$$d_y = d_y \quad wenn\ 0 \le d_y \le 1{,}0$$

$$d_y = 1{,}0 \quad wenn\ d_y > 1{,}0$$

$$d_y = 0 \quad wenn\ d_y < 0$$

$$d_x = d_x \quad wenn\ 0 \le d_x \le 1{,}0$$

$$d_x = 1{,}0 \quad wenn\ d_x > 1{,}0$$

$$d_x = 0 \qquad \text{wenn } d_x < 0.$$

Bei der Bestimmung der Zielpixeldaten entsteht ein Fehler, der für die Transformation eines Bildes mit der Höhe M und der Breite N als mittlerer Fehler e wie folgt definiert werden kann:

$$e = \left( \sum_{}^{M} \sum_{}^{N} \left[ 1 - \left( (1 - f(x_q, x_{hquell}) f(y_q - y_{hquell}) + 1 - ((1 - f_{xq+1}, x_{hquell}) (1 - f(y_{q+1}, y_{hquell})) \right) \right] / (M*N) \right.$$

wobei gilt:

$$f(u,v) = -(u-v) \qquad \text{wenn } u-v > 0$$

$$f(u,v) = u-v-1 \qquad \text{wenn } u-v > 1$$

$$f(u,v) = 0 \qquad \text{sonst.}$$

Dieser Fehler läßt sich wegen des Abschneidens der Nachkommastellen der Koordinaten nicht geschlossen bestimmen. Eine Simulation über verschiedene Bildgrößen und Winkel ergibt jedoch, daß dieser bei Ø = n * π / 4 (natürlich) bei 0 (sonst) zwischen 12 und 15 % liegt. Dieser Fehler ist bei natürlichen Szenen kaum zu bemerken, an scharfen Kanten ist nur bei gezieltem Fokus auf diese eine Auswirkung erkennbar.
Ausführungebeispiele der Erfindung werden nachfolgend anhand der Zeichnungen noch näher erläutert. Es zeigen:

Fig. 1    eine Darstellung eines bei der Bildtransformation möglicherweise auftretenden Zuordnungsproblems;

Fig. 2    ein Blockschaltbild einer Schaltung zur Durchführung der bekannten bilinearen Interpolation;

Fig. 3    ein Blockschaltbild einer Schaltung zur Durchführung des erfindungsgemäßen Verfahrens;

Fig. 4    eine graphische Verdeutlichung des bei der bilinearen Interpolation auftretenden Fehlers;

Fig. 5    einen Beleg, der mit der bilinearen Interpolation um 5,6 Grad gedreht wurde; und

Fig. 6    einen Beleg, der mit erfindungsgemäßen Verfahren um 5,6 Grad gedreht wurde.

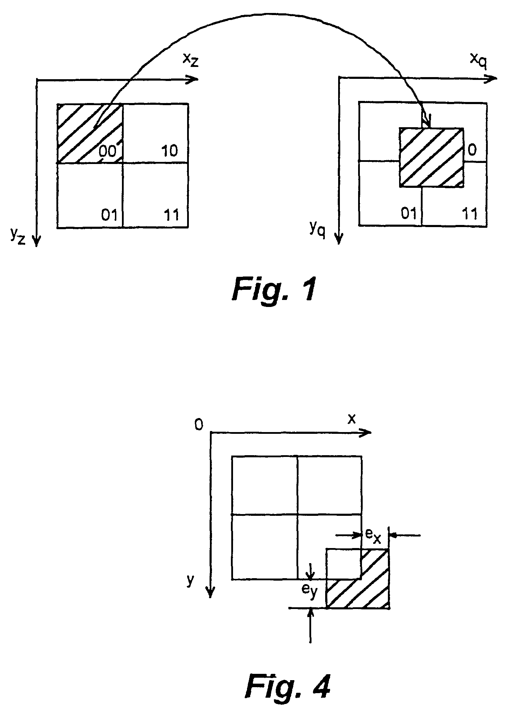

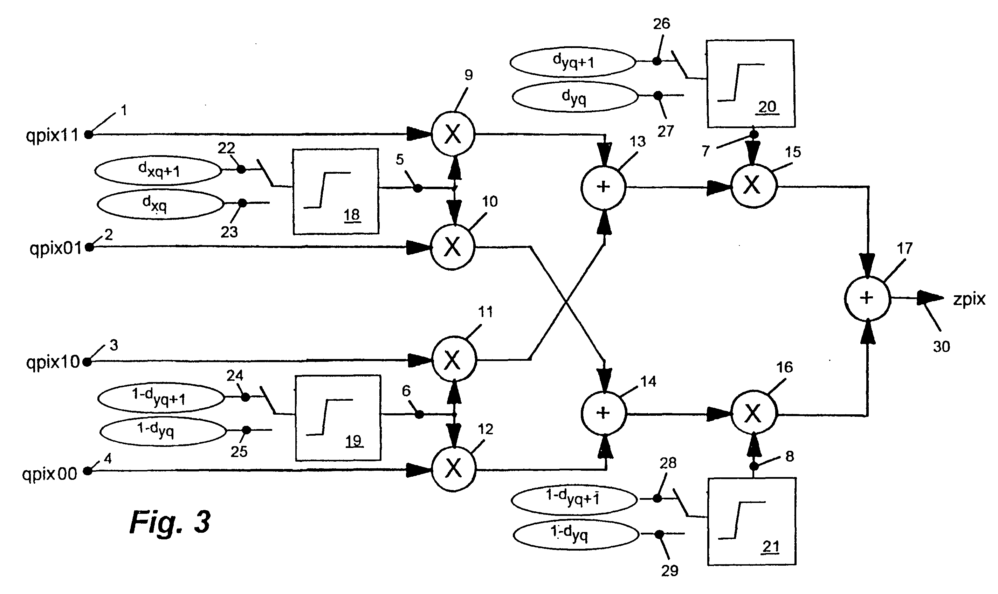

In Fig. 1 ist das durch Transformation des Bildes von einem Koordinatensystem in ein anderes Koordinatensystem auftretende Abbildungsproblem dargestellt.
Die zum natürlichen Wertebereich N gehörenden Koordinaten des Zielbildpixels korrespondieren dabei mit in den reellen Wertebereich R fallenden Koordinaten des Quellbildpixels.
Zur Lösung dieses Problems wurde bisher die bilineare Interpolation eingesetzt.

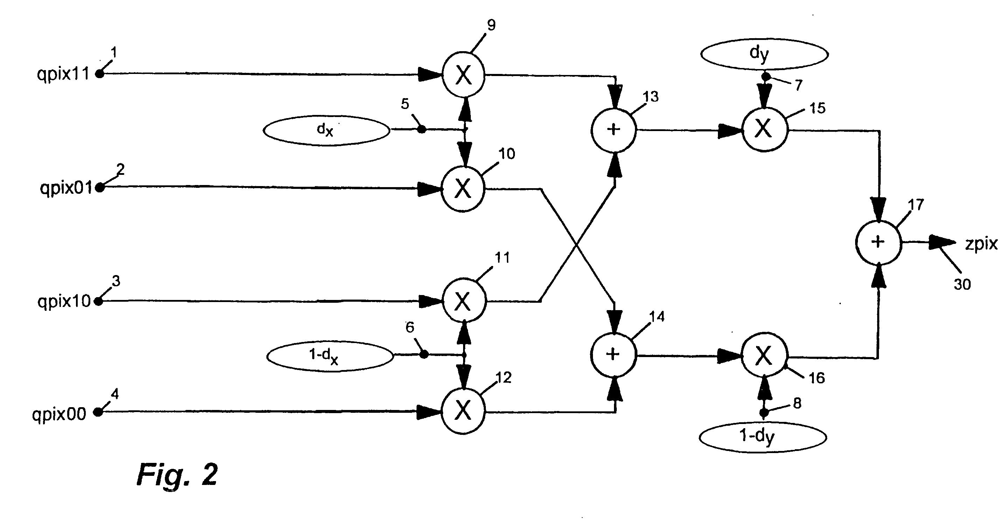

In Fig. 2 ist ein Blockschaltbild einer Schaltung dargestellt, der Signale zugeführt werden, die aus den Ergebnissen der bilinearen Interpolation gewonnen wurden.
Zum Vergleich zeigt Fig. 3 ein Blockschaltbild einer Schaltung, die das erfindungsgemäße Verfahren einsetzt.
Die in den Fig. 2 und 3 dargestellten Schaltungen weisen prinzipiell den gleichen Aufbau auf, wobei einander entsprechende Komponenten mit den gleichen Bezugszeichen versehen sind.
Beide Schaltungen weisen Eingangseinschlüsse 1,2,3,4 auf, denen Pixeldaten qpix11, qpix01, qpix10, qpix00 zugeführt werden. Weiterhin sind Eingangsanschlüsse 5,6,7,8 vorgesehen, denen Signale zugeführt werden, die aus Gewichten gewonnen werden, die entweder gemäß dem Stand der Technik (Fig. 2) oder gemäß der vorliegenden Erfindung (Fig. 3) bestimmt wurden. Der Ausgangsanschluß ist in beiden Figuren mit 30 bezeichnet.
Die Eingänge eines ersten Multiplizierers 9 sind mit den Eingangsanschlüssen 1 und 5 verbunden. Die Eingänge eines zweiten Multiplizierers 10 sind mit den Eingangsanschlüssen 2 und 5 verbunden. Die Eingänge eines dritten Multiplizierers 11 sind mit den Eingangsanschlüssen 3 und 6 verbunden, und die Eingangsanschlüsse eines vierten Multiplizierers 12 sind mit den Eingangsanschlüssen 4 und 6 verbunden.

Das Ausgangssignal des ersten Multiplizierers 9 und das Ausgangssignal des dritten Multiplizierers 11 werden einem ersten Addierers 13 zugeführt, während das Ausgangssignal des zweiten Multiplizierers 10 und das Ausgangssignal des vierten Multiplizierers 12 einem zweiten Addierer 14 zugeführt werden.

Die Eingänge eines fünften Multiplizierers 15 sind mit dem Eingangsanschluß 7 und dem Ausgang des ersten Addierers 13 verbunden.

In ähnlicher Weise sind die Eingänge eines sechsten Multiplizierers 16 mit dem Eingangsanschluß 8 und dem Ausgang des Addierers 14 verbunden.

Die Eingänge eines dritten Addierers 17 sind mit den Ausgängen des fünften und des sechsten Multiplizierers verbunden, wobei Ausgang des Addierers 17 den Ausgangsanschluß 30 bildet, an dem das Signal zpix abgenommen werden kann.

Bei der Schaltung nach Fig. 2 liegt an dem Eingangsanschluß 5 das Signal $d_x = x_q - frac(x_q)$ an, während dem Eingangsanschluß 6 das Signal $1 - d_x = 1- (x_q - frac(x_q))$ zugeführt wird. Weiterhin wird dem Eingangsanschluß 7 das Signal $d_y = y_q - frac(y_q)$ zugeführt, und dem Eingangsanschluß 8 wird das Signal $1 - d_y = 1 - (y_q - frac(y_q))$ zugeführt. Bei dieser Beschaltung liefert die Schaltung gemäß Fig. 2 am Ausgangsanschluß 30 die mit Hilfe der bekannten bilinearen Interpolation erhaltenen Pixeldaten zpix.

Bei dieser Vorgehensweise werden jedoch wie erwähnt für jedes Zielbildpixel die Werte der vier benachbarten Pixel benötigt, was beim Speicherzugriff zu einer Erhöhung der erforderlichen Kanalkapazität um das Vierfache gegenüber der für den Transport des Bildes erforderlichen Kapazität führt.

Dieses Problem wird durch die Beschaltung der Schaltung gemäß Fig. 3 insofern verringert, als die erforderliche Kanalkapazität zum Speicher hin halbiert wird.

Gemäß Fig. 3 sind zu diesem Zweck die Ausgänge von Taktumschaltern oder Multiplexern 18,19,20,21 mit den Eingangsanschlüssen 5,6,7,8 verbunden. Der mit dem Eingangsanschluß 5 verbundene Taktumschalter 18 weist seinerseits zwei Eingangsanschlüsse 22,23 auf. Der mit dem Eingangsanschluß 6 verbundene Taktumschalter 19 weist zwei Eingangsanschlüsse 24,25 auf, während der mit dem Eingangsanschluß 7 verbundene Taktumschalter 20 die zwei Eingangsanschlüsse 26,27 aufweist. Schließlich weist der mit dem Eingangsanschluß 8 verbundene Umschalter 21 die beiden Eingangsanschlüsse 28 und 29 auf.

Die Taktumschalter 18,19,20,21 arbeiten derart, dass entweder die Anschlüsse 22 und 5, 24 und 6, 26 und 7, 28 und 8, oder aber die Anschlüsse 23 und 5, 25 und 6, 27 und 7, 29 und 8 verbunden sind.

Dem Anschluß 22 wird das Signal $d_{xq+1}$, dem Anschluß 23 das Signal $d_{xq}$, dem Anschluß 24 das Signal $1-d_{yq+1}$, dem Anschluß 25 das Signal $1-d_{yq}$, dem Anschluß 26 das Signal $d_{yq+1}$, dem Anschluß 27 das Signal $d_{yq}$, dem Anschluß 28 das Signal $1-d_{yq+1}$, und dem Anschluß 29 das Signal $1-d_{yq}$ zugeführt.

Die Signale bzw. Werte $d_{xq}$, $d_{yq}$, $d_{xq-1}$ und $d_{yq+1}$ werden dabei entsprechend den obigen Ausführungen bestimmt.

Bei dieser Beschaltung der Schaltung wird das erfindungsgemäße Verfahren umgesetzt, wobei am Ausgangsanschluß 30 die Zielpixeldaten abgenommen werden können.

Die dem Blockschaltbild von Fig. 3 entsprechende Schaltung ist leicht zu implementieren und hat zudem den Vorteil, daß ohne zusätzlichen Aufwand auch die Normalform der bilinearen Interpolation bestimmt werden kann. Hierzu muß der Koordinatenzähler lediglich zweimal dieselbe Adresse generieren.

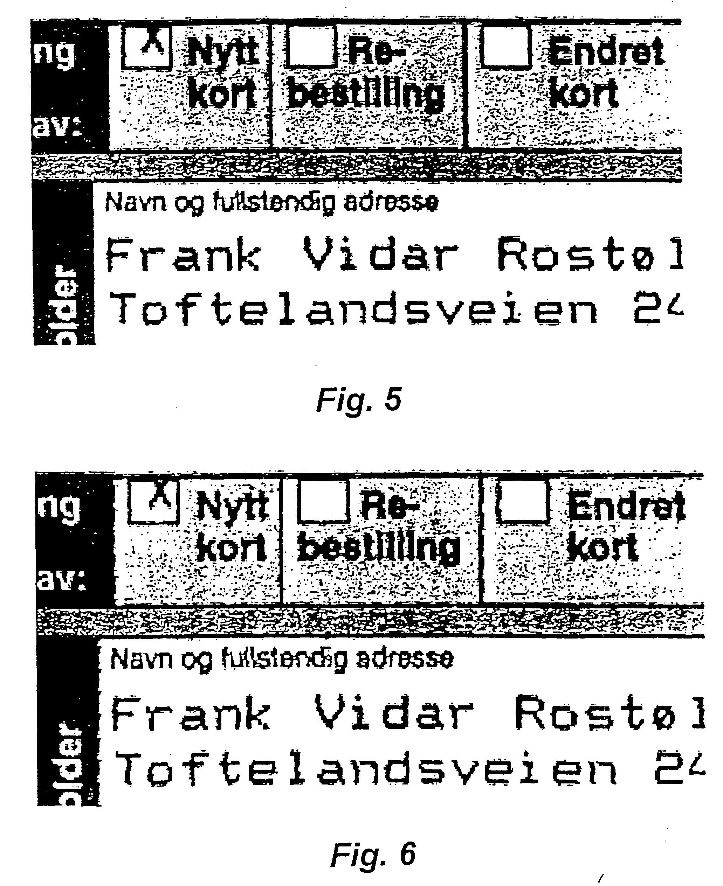

In Fig. 4 ist der bei der bekannten bilinearen Interpolation auftretende Fehler e dargestellt. Die schraffierte Fläche gibt den Flächenanteil $e = f(e_x,e_y)$ des Pixels an, der bei der bilinearen Interpolation aus den benachbarten Pixeln bestimmt

In Fig. 5 ist ein Teil eines Beleges dargestellt, der mit bilinearer Interpolation um 5,6 Grad gedreht wurde.

Zum Vergleich ist in Fig. 6 ein Teil des gleichen Beleges dargestellt, der mit dem erfindungsgemäßen Verfahren um 5,6 Grad gedreht wurde.

Der Fehler ist bei natürlichen Szenen kaum zu bemerken. Lediglich an scharfen Kanten ist bei gezieltem Fokus auf diese Kanten eine Auswirkung erkennbar, was durch einen Vergleich der Fig. 5 und 6 bestätigt wird.

Bezugszeichenliste

1        Eingangsanschluss
2        Eingangsanschluss
3        Eingangsanschluss
4        Eingangsanschluss

| 5 | Eingangsanschluss |
|---|---|
| 6 | Eingangsanschluss |
| 7 | Eingangsanschluss |
| 8 | Eingangsanschluss |
| 9 | Multiplizierer |
| 10 | Multiplizierer |
| 11 | Multiplizierer |
| 12 | Multiplizierer |
| 13 | Addierer |
| 14 | Addierer |
| 15 | Multiplizierer |
| 16 | Multiplizierer |
| 17 | Addierer |
| 18 | Taktumschalter |
| 19 | Taktumschalter |
| 20 | Taktumschalter |
| 21 | Taktumschalter |
| 22 | Eingangsanschluss |
| 23 | Eingangsanschluss |
| 24 | Eingangsanschluss |
| 25 | Eingangsanschluss |
| 26 | Eingangsanschluss |
| 27 | Eingangsanschluss |
| 28 | Eingangsanschluss |
| 29 | Eingangsanschluss |
| 30 | Ausganganschluss |
| qpix00 | Pixeldaten |
| qpix01 | Pixeldaten |
| qpix11 | Pixeldaten |
| qpix10 | Pixeldaten |

**Patentansprüche**

1. Verfahren zur Transformation eines durch Grauwertund/oder Farbvalenzwerte (s) in einem ersten Koordinatensystem beschriebenen Bildes in ein zweites Koordinatensystem, mit den folgenden Schritten:

   a) Herstellen einer Beziehung zwischen den Koordinaten von Quellbildpixeln (qpix) in einem Ausgangsbild und den Koordinaten von Zielbildpixeln (zpix) in einem Zielbild über eine Transformationsmatrix (T), wobei zum natürlichen Wertebereich (N) gehörende Koordinaten der Zielbildpixel (zpix) mit in den reellen Wertebereich (R) fallenden Koordinaten der Quellbildpixel (qpix) korrespondieren können und umgekehrt; und
   b) Berücksichtigung der Nachbarpixel bei der Bestimmung des Valenzwertes (s) eines Zielbildpixels (zpix);

   **dadurch gekennzeichnet, dass**
   bei Schritt b) aus den Koordinaten von jeweils zwei aufeinanderfolgenden Quellbildpixeln ($qpix_{x,y}$) Hilfskoordinaten ($x_{hquell}$, $y_{hquell}$) derart bestimmt werden, daß daraus zwei Zielbildpixel berechnet werden, wobei die Bestimmung der Hilfskoordinaten nach der folgenden Vorschrift erfolgt:

$$Y_{hquell} = (y_q + y_{q+1})\,/2$$

$$X_{hquell} = (x_q + x_{q+1})\,/2.$$

2. Verfahren nach Anspruch 1,
   **dadurch gekennzeichnet, dass**
   mit Hilfe der Hilfskoordinaten ($x_{hquell}$, $y_{hquell}$) Gewichte ($d_{xq}$, $d_{yq}$, $d_{xq+1}$, $d_{yq+1}$) aus folgenden Differenzenpaare bestimmt werden:

$$d_{xq} = x_q - \text{frac}(x_{hquell})$$

$$d_{yq} = y_q - \text{frac}(y_{hquell})$$

$$d_{xq+1} = x_{q+1} - \text{frac}(x_{hquell})$$

$$d_{yq+1} = y_{q+1} - \text{frac}(y_{hquell}).$$

3. Verfahren nach Anspruch 2,
   **dadurch gekennzeichnet, dass**
   die Gewichte $(d_{xq}, d_{yq}, d_{xq+1}, d_{yq+1})$ nach der folgenden Vorschrift beschnitten werden:

$$d_y = d_y \qquad \text{wenn } 0 \le d_y \le 1,0$$

$$d_y = 1,0 \qquad \text{wenn } d_y > 1,0$$

$$d_y = 0 \qquad \text{wenn } d_y < 0$$

$$d_x = d_x \qquad \text{wenn } 0 \le d_x \le 1,0$$

$$d_x = 1,0 \qquad \text{wenn } d_x > 1,0$$

$$d_x = 0 \qquad \text{wenn } d_x < 0.$$

4. Verfahren nach Anspruch 3,
   **dadurch gekennzeichnet, dass**
   der Valenzwerte (s) für ein Zielpixels (zpix) nach der folgenden Vorschrift berechnet wird:

$$s_{y,x} = (pix00-pix01)*(1,0-dy)-(pix10-pix11)*d_y$$

wobei gilt:

$$pix00 = qpix00*(1,0-d_x)$$

$$pix01 = qpix01*dx$$

$$pix10 = qpix10*(1,0-d_x)$$

$$pix11 = qpix11*d_x.$$

5. Verfahren nach einem der vorhergehenden Ansprüche,
   **dadurch gekennzeichnet, dass**
   der mittlere Fehler (e) bei der Transformation eines Bildes mit der Höhe (M) und der Breite (N) nach der folgenden

Vorschrift bestimmt wird:

$$e = (\sum_{}^{M} \sum_{}^{N} [1-((1-f(x_q, x_{hquell})f(y_q-y_{hquell})+1-\\((1-f_{xq+1}, x_{hquell})(1-f(y_{q+1}, y_{hquell}))]/(M*N)$$

wobei gilt:

$$f(u,v) = -(u-v) \qquad \text{wenn } u-v > 0$$

$$f(u,v) = u-v-1 \qquad \text{wenn } u-v > 1$$

$$f(u,v) = 0 \qquad \text{sonst.}$$

**6.** Vorrichtung zur Durchführung des Verfahrens nach einem der Ansprüche 1 bis 5, mit Eingangsanschlüssen (1,2,3,4), denen Pixeldaten (qpix00, qpix01, qpix10, qpix11) eines Quellbildes zugeführt werden, und mit einem Ausgangsanschluß (30), der Daten eines Zielbildpixels (zpix) ausgibt,
**dadurch gekennzeichnet, dass**
die Vorrichtung aus den Pixeldaten die Koordinaten von jeweils zwei aufeinanderfolgenden Quellbildpixeln (qpix$_{x,y}$) ermittelt und aus diesen Koordinaten Hilfskoordinaten nach folgender Vorschrift bestimmt:

$$Y_{hquell} = (y_q + y_{q+1}) / 2$$

$$X_{hquell} = (x_q + x_{q+1}) / 2,$$

wobei die Vorrichtung das Zielpixel (zpix) mit Hilfe der Hilfskoordinaten ermittelt.

**7.** Vorrichtung nach Anspruch 7 zur Durchführung des Verfahrens nach einem der Ansprüche 3 bis 6,
**dadurch gekennzeichnet, dass**
sie taktgesteuerte Umschalter (18,19,20,21) aufweist, denen aus den Gewichten ($d_{xq}, d_{yq}, d_{xq+1}, d_{yq+1}$) gewonnene Signale zugeführt werden, um diese selektiv weiterzuleiten.

**Claims**

**1.** A method for transforming an image described by grey scale valence values and/or colour valence values (s) in a first coordinate system into a second coordinate system, comprising the following steps:

a) providing a relationship between the coordinates of source image pixels (qpix) in a source image and the coordinates of target image pixels (zpix) in a target image by using a transformation matrix (T), in which coordinates of the target image pixels (zpix) belonging to the natural number range of values (N) can correspond with coordinates of the source image pixels (qpix) falling in the real number range of values (R), and vice versa; and
b) taking account of the neighbouring pixels in the determination of the valence value (s) of a target image pixel (zpix);

**characterized in that**
in step b) auxiliary coordinates ($x_{hquell}$, $y_{hquell}$) are determined from the coordinates of two respective successive source image pixels (qpix$_{x,y}$) such that two target image pixels can be calculated from this, the determination of the auxiliary coordinates being carried out according to the following rule:

$$Y_{hquell} = (y_q + y_{q+1}) / 2$$

$$X_{hquell} = (x_q + x_{q+1}) / 2.$$

2. The method according to claim 1,
   **characterized in that**
   weightings ($d_{xq}$, $d_{yq}$, $d_{xq+1}$, $d_{yq+1}$) are determined from the following pairs of differences with the aid of the auxiliary coordinates ($x_{hquell}$, $y_{hquell}$):

$$d_{xq} = x_q - frac(x_{hquell})$$

$$d_{yq} = y_q - frac(y_{hquell})$$

$$d_{xq+1} = x_{q+1} - frac(x_{hquell})$$

$$d_{yq+1} = y_{q+1} - frac(y_{hquell}).$$

3. The method according to claim 2,
   **characterized in that**
   the weightings ($d_{xq}$, $d_{yq}$, $d_{xq+1}$, $d_{yq+1}$) are truncated according to the following rule:

$$d_y = d_y \quad \text{if} \quad 0 \leq d_y \leq 1.0$$

$$d_y = 1.0 \quad \text{if} \quad d_y > 1.0$$

$$d_y = 0 \quad \text{if} \quad d_y < 0$$

$$d_x = d_x \quad \text{if} \quad 0 \leq d_x \leq 1.0$$

$$d_x = 1.0 \quad \text{if} \quad d_x > 1.0$$

$$d_x = 0 \quad \text{if} \quad d_x < 0.$$

4. The method according to claim 3,
   **characterized in that**
   the valence value (s) for a target pixel (zpix) is calculated according to the following rule:

$$s_{y,x} = (pix00-pix01)*(1.0-dy)-(pix10-pix11)*d_y$$

in which:

$$pix00 = qpix00*(1.0-d_x)$$

$$pix01 = qpix01*dx$$

$$pix10 = qpix10*(1.0-d_x)$$

$$pix11 = qpix11*d_x.$$

**5.** The method according to one of the preceding claims, **characterized in that** the standard error (e) in transforming an image having the height (M) and the width (N) is determined according to the following rule:

$$e = (\sum^{M} \sum^{N} [1-((1-f(x_q,x_{hquell})f(y_q-y_{hquell})+1-((1-f_{xq+1},x_{hquell})\,(1-f(y_{q+1},y_{hquell}))] \,/\, (M*N)$$

in which:

$$f(u,v) = -(u-v) \qquad \text{if } u-v > 0$$

$$f(u,v) = u-v-1 \qquad \text{if } u-v > 1$$

$$f(u,v) = 0 \qquad \text{otherwise.}$$

**6.** A device for implementing the method according to one of the claims 1 to 5, comprising input terminals (1, 2, 3, 4), to which pixel data (qpix00, qpix01, qpix10, qpix11) of a source image are supplied, and comprising an output terminal (30) which outputs data of a target image pixel (zpix), **characterized in that** the device determines from the pixel data the coordinates of two respective source image pixels ($qpix_{x,y}$) and determines from these coordinates auxiliary coordinates according to the following rule

$$Y_{hquell} = (y_q + y_{q+1}) \,/\, 2$$

$$X_{hquell} = (x_q + x_{q+1}) \,/\, 2,$$

the device determining the target pixel (zpix) with the aid of the auxiliary coordinates.

**7.** The device according to claim 7 for implementing the method according to one of the claims 3 to 6, **characterized in that** it comprises clock-controlled changeover switches (18, 19, 20, 21) to which signals obtained from the weightings ($d_{xq}$, $d_{yq}$, $d_{xq+1}$, $d_{yq+1}$) are supplied in order to forward these selectively.

**Revendications**

**1.** Procédé permettant de transformer dans un deuxième système de coordonnées une image décrite dans un premier système de coordonnées par des valeurs de gris et / ou des valeurs de spécification d'un stimulus de couleurs (s), comprenant les étapes consistant à :

a) établir un rapport entre les coordonnées des pixels d'image source (qpix) dans une image d'origine et les coordonnées des pixels d'image cible (zpix) dans une image cible par l'intermédiaire d'une matrice de transformation (T), moyennant quoi les coordonnées appartenant à la plage de valeurs naturelles (N) des pixels d'image cible (zpix) peuvent correspondre aux coordonnées appartenant à la plage de valeurs réelles (R) des pixels d'image source (qpix) et inversement ; et

b) tenir compte des pixels voisins quand on détermine la valeur de spécification de stimulus de couleurs (s) d'un pixel d'image cible (zpix) ;

**caractérisé en ce que**, à l'étape b), à partir des coordonnées de respectivement deux pixels d'image source ($qpix_{x,y}$) successifs, on détermine des coordonnées auxiliaires ($x_{hsource}$, $h_{ysource}$), de telle sorte qu'on peut calculer, à partir de celles-ci, deux pixels d'image cible, la détermination des coordonnées auxiliaires étant réalisée à l'aide des formules suivantes :

$$Y_{hsource} = (y_q + y_{q+1})/2$$

$$X_{hsource} = (x_q + x_{q+1})/2.$$

2. Procédé selon la revendication 1, **caractérisé en ce que**, à l'aide des coordonnées auxiliaires ($x_{hsource}$, $y_{hsource}$), on détermine des pondérations ($d_{xq}$, $d_{yq}$, $d_{xq+1}$, $d_{yq+1}$) à partir des paires différentielles suivantes :

$$d_{xq} = x_q - frac\ (x_{hsource})$$

$$d_{yq} = y_q - frac(y_{hsource})$$

$$d_{xq+1} = x_{q+1} - frac\ (x_{hsource})$$

$$d_{yq+1} = y_{q+1} - frac(y_{hsource}).$$

3. Procédé selon la revendication 2, **caractérisé en ce que** les pondérations ($d_{xq}$, $d_{yq}$, $d_{xq+1}$, $d_{yq+1}$) sont réparties selon les formules suivantes :

$$d_y = d_y \qquad si\ 0 \leq d_y \leq 1,0$$

$$d_y = 1,0 \qquad si\ d_y > 1,0$$

$$d_y = 0 \qquad si\ d_y < 0$$

$$d_x = d_x \qquad si\ 0 \leq d_x \leq 1,0$$

$$d_x = 1,0 \qquad si\ d_x > 1,0$$

$$d_x = 0 \qquad si\ d_x < 0$$

4. Procédé selon la revendication 3, **caractérisé en ce que** la valeur de spécification de stimulus de couleurs (s) pour un pixel cible (zpix) est calculée selon la formule suivante :

$$s_{y,x} = (pix00-pix01)*(1,0-d_y)-(pix10-pix11)*d_y,$$

sachant que :

$$pix00 = qpix00*(1,0-d_x)$$

$$pix01 = qpix01*d_x$$

$$pix10 = qpix10*(1,0-d_x)$$

$$pix11 = qpix11*d_x.$$

**5.** Procédé selon l'une quelconque des revendications précédentes, **caractérisé en ce que** l'erreur moyenne (e), dans la transformation d'une image de hauteur (M) et de largeur (N), est déterminée grâce à la formule suivante :

$$e = \sum_{}^{M} \sum_{}^{N} \left[ 1 - \left( \left( 1 - f\left(x_q, x_{hsource}\right) \right) f\left(y_q - y'_{hsource}\right) \right) + 1 - \right.$$

$$\left. \left( \left( 1 - f\left(x_{q+1}, x_{hsource}\right) \right) \left( 1 - f\left(y_{q+1}, y_{hsource}\right) \right) \right) \right] / (M * N)$$

sachant que :

$$f(u,v) = -(u-v) \qquad \text{si } u-v > 0$$

$$f(u,v) = u-v-1 \qquad \text{si } u-v > 1$$

$$f(u,v) = 0 \qquad \text{dans les autres cas.}$$

**6.** Dispositif permettant de mettre en oeuvre le procédé selon l'une quelconque des revendications 1 à 5, avec les connexions d'entrée (1, 2, 3, 4) vers lesquelles sont acheminées les données de pixels (qpix00, qpix01, dpix10, qpix11) d'une image source, et avec une connexion de sortie (30) qui délivre les données d'un pixel d'image cible (zpix),
    **caractérisé en ce que** le dispositif, à partir des données de pixels, délivre les coordonnées de respectivement deux pixels d'image source ($qpix_{x,y}$) successifs, et détermine, à partir de ces coordonnées, des coordonnées auxiliaires selon les formules suivantes :

$$Y_{hsource} = (y_q + y_{q+1}) / 2$$

$$X_{hsource} = (x_q + x_{q+1}) / 2,$$

sachant que le dispositif délivre le pixel cible (zpix) à l'aide des coordonnées auxiliaires.

**7.** Dispositif selon la revendication 6, permettant de mettre en oeuvre le procédé selon l'une quelconque des revendications 3 à 6, **caractérisé en ce qu'**il comporte des commutateurs (18, 19, 20, 21) cadencés, vers lesquels sont

**13**

acheminés les signaux obtenus à partir des pondérations ($d_{xq}$, $d_{yq}$, $d_{xq+1}$, $d_{yq+1}$), afin de transmettre ceux-ci de manière sélective.

$x_z$

$x_q$

| 00 | 10 |
| 01 | 11 |

$y_z$

| | 0 |
| 01 | 11 |

$y_q$

## Fig. 1

0

x

$e_x$

y

$e_y$

## Fig. 4

qpix11

qpix01

qpix10

qpix00

1

2

3

4

5

6

7

8

9

10

11

12

13

14

15

16

17

30

d$_x$

1-d$_x$

dy

1-dy

X

X

X

X

+

+

X

X

+

zpix

**Fig. 2**

Fig. 3

EP 1 259 938 B1

*Fig. 5*

*Fig. 6*